# EUROPÄISCHE PATENTSCHRIFT

(11) **EP 3 039 759 B1**
(45) Veröffentlichungstag und Bekanntmachung des Hinweises auf die Patenterteilung: **29.11.2017**
(21) Anmeldenummer: 14793465.7
(22) Anmeldetag: 20.10.2014
(51) Int. Cl.: H02G 3/22

(54) **FEUERFESTE WANDDURCHFÜHRUNG FÜR EINEN ELEKTRISCH ISOLIERTEN LEITER UND VERFAHREN ZUR HERSTELLUNG EINER FEUERFESTEN WANDDURCHFÜHRUNG**
FIREPROOF WALL LEAD-THROUGH FOR AN ELECTRICALLY INSULATED CONDUCTOR AND METHOD FOR PRODUCING A FIREPROOF WALL LEAD-THROUGH
TRAVERSÉE MURALE IGNIFUGE POUR UN CONDUCTEUR ISOLÉ ÉLECTRIQUEMENT ET PROCÉDÉ DE FABRICATION D'UNE TRAVERSÉE MURALE IGNIFUGE

(30) Priorität: 22.10.2013 DE 102013221417
(43) Veröffentlichungstag der Anmeldung: 06.07.2016
(73) Patentinhaber: Siemens Aktiengesellschaft, 80333 München (DE)
(72) Erfinder: BRUSIUS, Detlef, 91058 Erlangen (DE); GRONBACH, Manfred, 91074 Herzogenaurach (DE)
(86) Internationale Anmeldenummer: PCT/EP2014/072396
(87) Internationale Veröffentlichungsnummer: WO 2015/059070

(56) Entgegenhaltungen:
- EP-A2- 0 567 773
- WO-A1-84/02156
- WO-A1-2012/009742
- DE-A1-102008 003 120
- GB-A- 2 077 382
- US-A- 5 174 077
- US-A1- 2013 095 275
- "# Fire Barrier Expantrol Flexible Intumescent Strip (E-FIS)", , 31. Dezember 2002 (2002-12-31), XP055169414, Gefunden im Internet: URL:http://multimedia.3m.com/mws/media/213 268O/e-fis-product-data-sheet.pdf?&fn=E-FI S Product Data Sheet.pdf&fn=E-FIS Product Data Sheet.pdf [gefunden am 2015-02-12]

## Beschreibung

GB2077382 zeigt eine feuerbeständige Hülse zur Bildung einer feuerfesten Dichtung.

Mit der Erfindung soll ein generelles technisches Problem bei der Lösung von brandschutztechnischen Anforderungen in Kraftwerken im Bereich von einphasig gekapselten Hochstromverbindungen, sogenannten Generatorableitungen, gelöst werden. Bei einer Generatorableitung handelt es sich um die elektrische Verbindung zwischen dem Generator und dem zugehörigen Maschinen- und Eigenbedarf-Transformatoren in Kraftwerken. Der konstruktive Aufbau dieser elektrischen Verbindung ist einphasig isoliert, d.h. jeder der drei Stromleiter/Rohrschienen (3-Phasen-Drehstromsystem) befindet sich in einer eigenen Kapselung der sogenannten Ableitungshülle (koaxialer Aufbau). Sowohl das Stromleiterrohr als auch die Ableitungshülle werden aus Rein-Aluminium Al 99,5 hergestellt. Die installierte Generatorableitung verläuft vom Generator durch das sogenannte Maschinenhaus in Richtung der Transformatoren im Freiluftbereich. Dabei passiert/durchdringt die Generatorableitung sowohl die Außenwand des Maschinenhauses als auch die sogenannte Brandschutzwand zwischen dem Eigenbedarfstransformator und dem Maschinen- oder Blocktransformator.

Die Brandschutzwand zwischen den Transformatoren, sowie die Maschinenhauswand müssen den Brandschutzanforderungen F30, F60 (30 bzw. 60 Minuten Feuerbeständigkeit - feuerhemmend/ hochfeuerhemmend) und auch ab und zu höheren Anforderungen entsprechen. Bautechnisch ist das in aller Regel für die Wandausführung kein Problem. Die für eine Generatorableitung erforderlichen Öffnungen mit einer Höhe von 800 mm bis zu 1440 mm und einer Breite von mehr als 4000 mm führen jedoch dazu, dass die geforderten Brandschutzanforderungen nicht eingehalten werden können. Der Grund hierfür ist, das eine in der Öffnung eingebaute bzw. eingemauerte Generatorableitung in aus Aluminium bei einer Temperatur von ≥ 500°C im Brandfall schmilzt und dabei Öffnungen in der Wand (entsprechend dem Durchmesser der 3-einphasigen-Generatorableitungs-Hüllrohre) entstehen, wodurch der Brand von der einen Seite der Wand zur anderen Seite übertreten kann.

Eine bereits bekannte Konstruktion zum Schutz des Bereichs um die Außenhülle sieht vor, die Öffnung beidseitig der Brandschutzwand mit einer doppelseitigen Aluminium-Blechverkleidung zu verschließen, wobei zusätzliche Mineralwolle zwischen die Bleche gefüllt wird. Anstelle der Mineralwolle kommen auch sogenannte Brandschutzplatten von ca. 20 mm Dicke (in Sandwich Bauweise mehrfach zusammengefügt) zum Einsatz. Jedoch können auch durch diese Konstruktion die Öffnungen nicht vollständig geschlossen werden und somit die Brandschutzbestimmungen nicht eingehalten werden.

Aufgabe der Erfindung ist es, eine feuerfeste Wanddurchführung für Generatorableitung anzugeben, die den Brandschutzbestimmungen für Kraftwerksanlagen genügt.

Die auf die feuerfeste Wanddurchführung gerichtete Aufgabe der Erfindung wird gelöst durch die Merkmale des Anspruchs 1.

Demnach besteht die feuerfeste Wanddurchführung für eine elektrisch isolierten Leiter aus einer Wand, einem durch die Wand führenden Mauerrohr, einer durch das Mauerrohr verlaufenden Außenhülle und einen durch die Außenhülle geführten Leiter, der von der Außenhülle elektrisch isolierend beabstandet ist. Die Erfindung ist dadurch gekennzeichnet, dass auf der Außenhülle und dem Leiter im Leiterabschnitt der Wandöffnung ein Intumeszenz-Material aufgebracht ist, das bei Hitzeeinwirkung aufquillt und die Wanddurchführung verschließt.

Bei dem Intumeszenz-Material handelt es sich um einen Baustoff, ein Brandschutz-Dämmmittel, welches bei Hitzeeinwirkung aufschäumt, und dabei an Volumen 10-20 fach zu- und an Dichte abnimmt. Das Intumeszenz-Material wird bei der Errichtung der Wanddurchführung aufgebracht und ist im normalen Betrieb bei 90° C bis 105° C Formstabil. Kommt es zu einem Brandfall (z.B. durch den Brand des Trafos) und zu einer damit verbundenen Hitzeentwicklung von über 150°C, schäumt das Intumeszenz-Material auf und verschließt alle Öffnungen in der Wanddurchführung.

Verschlossen werden der Ringspalt zwischen Rohrleiter und Außenhülle, der Hohlraum des Rohrleiters und der Ringspalt zwischen Außenhüllfläche und dem Mauerrohr. Durch das Aufquellen bzw. Aufschäumen des Intumeszenz-Materials werden alle konstruktiv vorgegebenen Öffnungen und Ringspalte der Generatorableitung im Bereich Brandschutzwand verschlossen. Ein Brand kann somit nicht von einer Seite zur anderen Seite der Brandschutzwand übertreten. Dadurch wird vermieden, dass Feuer durch entstehende Löcher in der Wanddurchführung von der einen Seite der Wand zur anderen übertritt. Konstruktiv werden alle drei Phasen der Generatorableitung im Bereich der Wanddurchführung erfindungsgemäß mit dem Intumeszenz-Material beschichtet.

Da die Temperatur des Rohrleiters im Normalbetrieb bis maximal zwischen 90° C und 105° C beträgt, ist es aus außerordentlich wichtig, dass die erfindungsgemäße Beschichtung mit Intumeszenz-Material erst bei einer Temperatur von ≥ 120°C aufquillt. Durch das Aufquellen würde der im Betrieb der Ableitung erforderliche Luftabstand (elektrische Schlagweite zwischen Rohrleiter und Außenhülle) zum Erdpotential hin aufgehoben und es käme zu einem Erdschluss bzw. Doppelerdschluss, wodurch der Kraftwerksblock ausfallen würde.

Das Intumeszenz-Material wird vorzugsweise einerseits zwischen dem Mauerrohr und der Außenseite der Außenhülle aufgebracht, sodass bei Hitzeeinwirkung der Raum zwischen Mauerrohr und Außenhülle verschlossen wird, und andererseits auf der Innenseite der Außenhülle und auf der Außenseite des Leiters, sodass bei Hitzeeinwirkung der Raum zwischen Außenhülle und Leiter verschlossen wird.

Der Leiter bei Generatorableitung ist ein Rohleiter, welcher innen hohl ist. Um auch den inneren Teil des Rohleisters im Brandfall zu verschließen, weist der Rohrleiter im Rohrabschnitt der Wanddurchführung wenigstens eine senkrecht zur Rohrachse angeordnete Platte aufweist, welche mit dem Intumeszenz-Material beschichtet ist. Im Brandfall schäumt diese auf und verschließt das Rohrinnere des Rohrleiters. Erfindungsgemäß weist der Rohrleiter zwei Platten auf, die in einem Abstand zueinander angeordnet sind, und die auf der jeweils einander zugewandten Seite mit dem Intumeszenz-Material beschichtet sind. Der Abstand entspricht vorzugsweise in etwa der Dicke der Wand. Im Brandfall schäumen die Schichten mit Intumeszenz-Material auf, verbinden sich, und verschließt somit das Rohrinnere des Rohrleiters.

Das Intumeszenz-Material hat vorzugsweise eine Dicke von zwischen 10 und 25 mm und wird in Platten aufgebracht. Die auf Außenseiten aufzubringenden Platten sind vorzugsweise 3 mal 10 x 250 mm und die auf Innenseiten aufzubringenden Platten vorzugsweise 1 mal 25 x 250 mm breit.

Bei einer besonderen Weiterentwicklung ist das Intumeszenz-Material in Platten aufgebracht, und auf der den Außenseiten über Bänder und auf der Innenseite mit Klammern mechanisch fixiert.

Die Außenhülle im Leiterabschnitt der Wandöffnung weist einen größeren Durchmesser auf um auch noch nach den einbringen des Intumeszenz-Materials die benötigte Schlagweite zwischen dem Leiter und der Hülle zu gewährleisten.

Im Folgenden werden Ausführungsbeispiele der Erfindung anhand von Zeichnungen näher erläutert. Darin zeigt
- FIG 1 und FIG 2: eine Außenhülle und einen Rohrleiter im Bereich der Wanddurchführung,
- FIG 3: eine Schnittansicht einer Wanddurchführung mit einer Außenhülle und einem Rohrleiter umfassenden elektrisch isolierten Leiter,
- FIG 4: Eine Außenansicht einer Wanddurchführung mit 3 verschiedenen Außenhüllen und einem Rohrleiter umfassenden elektrisch isolierten Leiter, und
- FIG 5: Eine Außenansicht einer Wanddurchführung mit eingebrachten Mauerrohren.

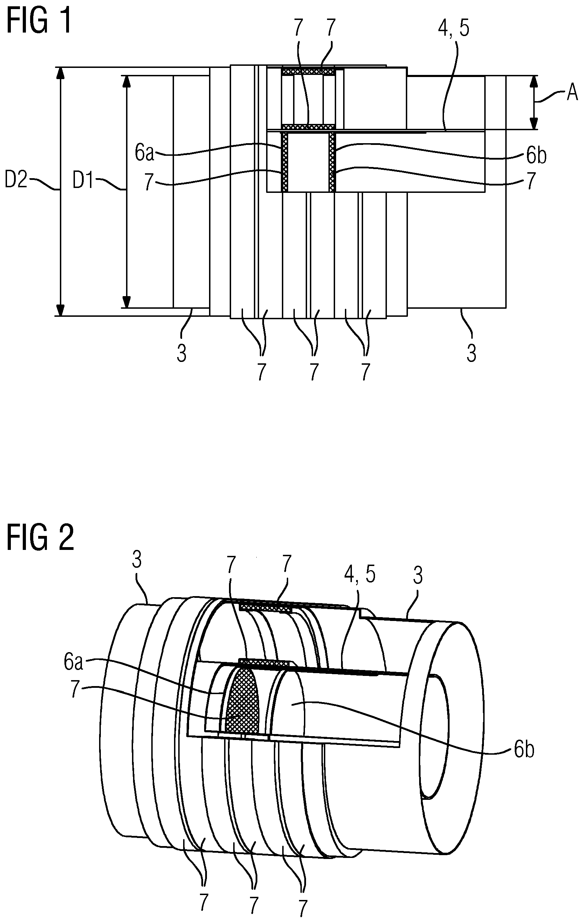

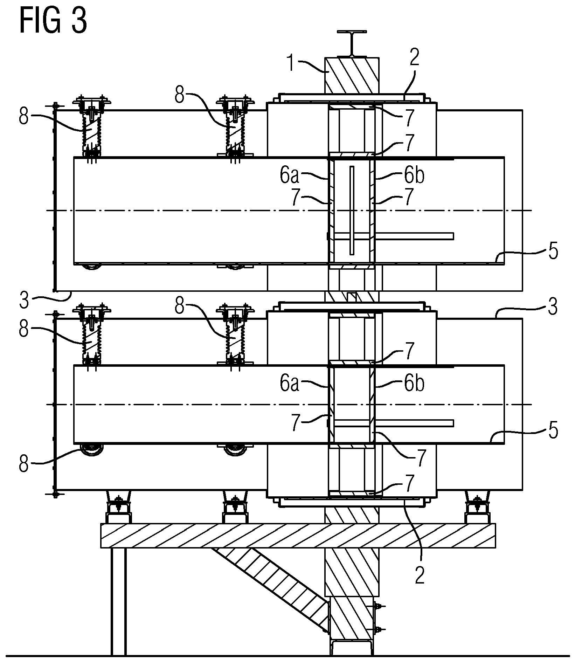

Figur 1 zeigt eine zweidimensionale Seitenansicht der in Figur 3 dreidimensional gezeigten Außenhülle 3 einer Generatorableitung, wie sie in ein Mauerrohr eingeführt wird. In der Außenhülle 3 befindet sich der Leiter 4, der als Rohrleiter 5 ausgebildet ist. Der Abstand A zwischen Außenhülle 3 und Rohrleiter 5 wird auch als Ringspalt bezeichnet und ist grundsätzlich gefordert wegen der Spannungsfestigkeit der Generatorableitung. Der Ringspalt ist konstruktiv vorgegeben und beträgt in diesem Beispiel 230 mm.

Innerhalb des Rohrleiters sind zwei Platten 6a und 6b senkrecht zur Rohrachse angeordnet, die mit einem Intumeszenz-Material 7 auf der jeweils einander Zugewanten Seite beschichtet sind.

Der Rohrleiter 5 ist auf seiner Außenseite mit dem Intumeszenz-Material 7 beschichtet, und die Außenhülle auf ihrer Innenseite und auf ihrer Außenseite. Die Außenhülle hat einen Durchmesser D1. Im Bereich der der inneren Beschichtung mit dem Intumeszenz-Material 7 ist der Durchmesser D2 um die 1 bis 2-fache Dicke des Intumeszenz-Materials größer. Dadurch wird auch im Bereich der Intumeszenz-Beschichtung der gleiche Ringspalt wie im nicht beschichteten Teil der Außenhülle eingehalten.

Figur 3 zeigt eine Schnittansicht einer Wanddurchführung einer 3-phasigen Generatorableitung mit einem Mauerrohr 2, einer Außenhülle 3 und einem Rohrleiter 5 für jede Phase. Die Wanddurchführung besteht dabei im Wesentlichen aus einer Wand 1, dem Mauerrohr 2, den Außenhüllen 3 und den Rohrleitern 5. Die Außenhüllen 3 werden durch Isolatoren im Abstand von dem Rohrleiter gehalten. In den Rohrleitern 5 sind die Plate 6a du 6b angeordnet, die jeweils auf ihrer Innenseite mit dem Intumeszenz-Material 7 beschichtet sind. Der Abstand der Platten 6a und 6b entspricht dabei in etwa der Dicke der Wand 1. Die Rohrleiter 5 sind außen mit dem Intumeszenz-Material 7 beschichtet. Auch die Außenhüllen 3 sind auf ihrer Innen- und Außenseite mit dem Intumeszenz-Material 7 beschichtet.

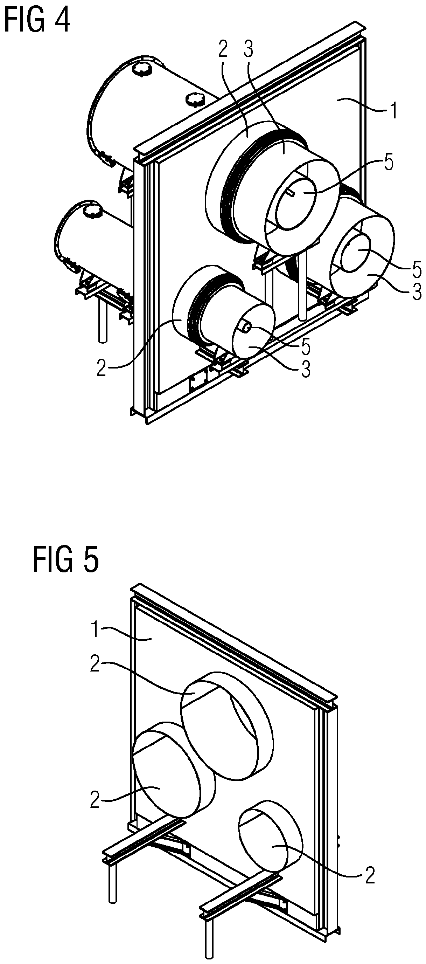

Figur 4 zeigt eine Außenansicht einer Wanddurchführung mit einer Außenhülle 3und einem Rohrleiter 5. Gezeigt sind hier verschiedene Größen von Rohrleitern 5 und Außenhüllen 3. Bei einer konstruktiven Umsetzung der Erfindung werden aber alle drei Phasen der der Generatorableitung mit gleichem Durchmesser der Außenhüllen 3 und der Rohrleiter 5 verwirklicht.

Figur 5 zeigt eine Außenansicht einer Wanddurchführung mit einer Wand 1 und den Mauerrohren 2.

Durch die Erfindung wird auf eine besonders technisch und konstruktiv einfache Art und Weise eine hohe Brandschutzsicherheit gewährleistet. Dazu sind an den standardisierten Bauteile der Generatorableitung nur geringfügige Anpassungen vorgenommen werden. Durch die Erfindung sind dadurch die Brandschutzauflagen sehr kostengünstig realisierbar.

Die erfindungsgemäßen Vorteile ergeben sich analog zu der feuerfesten Wanddurchführung gemäß Anspruch 1.

Vorzugsweise werden zwischen dem Mauerrohr und der Außenseite der Außenhülle der Generatorableitung drei Lagen an Platten Intumeszenz-Material außen auf der Außenhülle aufgebracht. Auf der Innenseite der Außenhülle und auf der Außenseite des Leiters wird jeweils eine Lage an Platten Intumeszenz-Material aufgebracht. Der Leiter innen wird mit zwei mit Intumeszenz-Material beschichteten Ronden verschlossen.

## Patentansprüche

1. Feuerfeste Wanddurchführung für einen elektrisch isolierten Leiter, bestehend aus einer Wand (1), eines durch die Wand führenden Mauerrohrs (2), einen durch das Mauerrohr (2) verlaufenden Außenhülle (3) und einen durch die Außenhülle geführten Rohrleiter (4, 5), der von der Außenhülle (3) elektrisch isolierend beabstandet ist, wobei auf der Außenhülle (3) und dem Rohrleiter (4, 5) im Rohrabschnitt des Mauerrohres (2) ein Intumeszenz-Material (7) aufgebracht ist, welches bei Hitzeeinwirkung aufquillt und die Wanddurchführung verschließt, **dadurch gekennzeichnet, dass** der Rohleiter (4, 5) in dem Rohrabschnitt der Wanddurchführung wenigstens zwei senkrecht zur Rohrachse angeordnete Platten (6a, 6b) aufweist, die in einem Abstand zueinander angeordnet sind, und die auf der jeweils einander zugewandten Seite mit dem Intumeszenz-Material (7) beschichtet sind.

2. Feuerfeste Wanddurchführung nach Anspruch 1, **dadurch gekennzeichnet, dass** das Intumeszenz-Material (7) mit einer Dicke von 10 bis 25 mm aufgebracht wird.

3. Feuerfeste Wanddurchführung nach einem der Ansprüche 1 oder 2, **dadurch gekennzeichnet, dass** das Intumeszenz-Material (7) in Platten aufgebracht ist, und auf der den Außenseiten über Bänder und auf der Innenseite mit Klammern mechanisch fixiert wird.

4. Feuerfeste Wanddurchführung nach einem der Ansprüche 1 bis 3, **dadurch gekennzeichnet, dass** die Außenhülle (3) im Leiterabschnitt des Mauerrohres (2) einen um die Dicke des Intumeszenz-Materials (7) vergrößerten Durchmesser aufweist.

## Claims

1. Fireproof wall lead-through for an electrically insulated conductor, comprising a wall (1), a wall pipe (2) extending through the wall, an outer shell (3) extending through the wall pipe (2) and a tubular conductor (4,5) routed through the outer shell, which is spaced apart from the outer shell (3) in an electrically insulating arrangement, wherein an intumescent material (7) is applied to the outer shell (3) and the tubular conductor (4, 5) in the tube segment of the wall pipe (2), which swells and closes the wall lead-through under the influence of heat, **characterized in that** the tubular conductor (4, 5), in the wall lead-through tube segment, is provided with at least two plates (6a, 6b) arranged perpendicular to the tube axis, which are mutually spaced, and the respective inward-facing side of which is coated with the intumescent material (7).

2. Fireproof wall lead-through according to Claim 1, **characterized in that** the intumescent material (7) is applied to a thickness of 10 - 25 mm.

3. Fireproof wall lead-through according to one of Claims 1 or 2, **characterized in that** the intumescent material (7) is applied in panels, and is mechanically secured to the outer surfaces by means of tapes and to the inner surface by means of clamps.

4. Fireproof wall lead-through according to one of Claims 1 to 3, **characterized in that**, in the conductor segment of the wall pipe (2), the diameter of the outer shell (3) is increased by the thickness of the intumescent material (7).

## Revendications

1. Traversée de paroi ignifuge pour un conducteur isolé électriquement, constituée d'une paroi (1), d'un tuyau (2) de mur traversant la paroi, d'une gaine (3) extérieure s'étendant dans le tuyau (2) de mur et d'un conducteur (4, 5) tubulaire guidé dans la gaine extérieure, qui, en étant isolé électriquement, est à distance de la gaine (3) extérieure, dans laquelle, sur la gaine (3) extérieure et le conducteur (4, 5) tubulaire, est déposée, dans le tronçon du tuyau (2) de mur, une matière intumescente qui, sous l'effet de la chaleur, foisonne et ferme la traversée de paroi, **caractérisée en ce que** le conducteur (4, 5) tubulaire a, dans le tronçon de tuyau de la traversée de paroi, au moins deux plaques (6a, 6b), qui sont disposées perpendiculairement à l'axe du tuyau, qui sont à distance les unes des autres et qui sont revêtues de la matière (7) intumescente sur les côtés tournés l'un vers l'autre.

2. Traversée de paroi ignifuge suivant la revendication 1, **caractérisée en ce que** la matière (7) intumescente est déposée en une épaisseur de 10 à 25 mm.

3. Traversée de paroi ignifuge suivant l'une des revendications 1 ou 2, **caractérisée en ce que** la matière (7) intumescente est déposée en plaque et est immobilisée mécaniquement sur les côtés extérieurs par des rubans et sur le côté intérieur par des agrafes.

4. Traversée de paroi ignifuge suivant l'une des revendications 1 à 3, **caractérisée en ce que** la gaine (3) extérieure a, dans le tronçon conducteur du tuyau (2) de mur, un diamètre agrandi de l'épaisseur de la matière (7) intumescente.
